# EUROPEAN PATENT SPECIFICATION

(11) **EP 4 517 085 B1**
(45) Date of publication and mention of the grant of the patent: **08.10.2025**
(21) Application number: 23193682.4
(22) Date of filing: 28.08.2023
(51) Int. Cl.: F03D 17/00

(54) **WIND TURBINE WITH TURBINE BLADE STRAIN CONTROL**
WINDTURBINE MIT TURBINENSCHAUFELBELASTUNGSSTEUERUNG
ÉOLIENNE AVEC CONTRÔLE DE CONTRAINTE DE PALE DE TURBINE

(43) Date of publication of application: 05.03.2025
(73) Proprietor: Siemens Gamesa Renewable Energy A/S, 7330 Brande (DK)
(72) Inventor: Molitor, David, Longmont, CO 80501 (US); Van Dam, Nicholas, Sanford, 32773 (US)
(74) Representative: SGRE-Association

(56) References cited:
- EP-A1- 4 112 928
- JP-A- 2021 025 859
- US-A1- 2017 284 376

## Description

The present invention relates to a wind turbine with a wind turbine blade strain control. The invention also relates to a method for determining a strain of a wind turbine blade of a wind turbine.

Wind turbine blades of wind turbines, especially offshore wind turbines, are subjected to a large mechanical load. Excessive wind loads can result in an overload of the wind turbine blade, which can result in structural damages and failure of the wind turbine blade.

Therefore, it is crucial for the operation and maintenance of wind turbines to get information about strain of the wind turbine blades. Distributed strain within a wind turbine blade is usually measured by using optical time-domain reflectometry via the use of Fiber-Bragg sensors. Due to the high complexity of the measurement system needed for performing such measurements, it is typically used for testing purposes, e.g., in a workshop or in an idle state of the wind turbine.

Alternatively, point measurements of strain of turbine blades have been performed by using conventional strain gages. This measurement can be performed during operation of the wind turbine, e.g., for control purposes. These sensors for a Load-Optimized-Pitch-Control strategy (LOPC) are of a conventional type.

Known strain measurement systems for turbine blades have the disadvantages that the setup often is very complex, measurement can only be performed during idle time of the wind turbine or lacks accuracy so that minor structural damages to the turbine blade may not be detected reliably.

Prior art documents that have been considered during the patent persecution procedure are i.a.: US 2017/284376 A1, EP 4 112 928 A1, and JP 2021 025859 A.

It is therefore the object of the present invention to eliminate or at least partially eliminate the disadvantages described above in the case of a wind turbine. In particular, it is the object of the present invention to create a wind turbine with a wind turbine blade strain control and a method for determining a strain of a wind turbine blade of a wind turbine which avoid complex measuring systems and/or ensure a precise strain measurement, e.g., point strain measurement and/or distributed strain measurement during operation of the wind turbine in a simple and inexpensive manner.

The above object is achieved by the claims. Accordingly, the problem is solved by a wind turbine with a wind turbine blade strain control with the features of the independent claim 1 and by a method for determining a strain of a wind turbine blade of a wind turbine with the features of the subordinate claim 11. Further features and details of the invention emerge from the subclaims, the description and the drawings. Features and details that are described in connection with the wind turbine according to the invention naturally also apply in connection with the method according to the invention and vice versa, so that with regard to the disclosure of the individual aspects of the invention, reference is or can always be made to each other.

According to a first aspect of the invention, the object is achieved by a wind turbine with a wind turbine blade strain control. The wind turbine comprises a tower, a nacelle, a rotor, a hub, a plurality of wind turbine blades, a generator and a controller for controlling the operation of the wind turbine. The wind turbine blades comprise a root section for engaging the hub, a tip end section and an intermediate section between the root section and the tip end section. Moreover, the wind turbine blades comprise a spar-cap, extending between the root section and the tip end section. According to the invention, the wind turbine blade comprises a first electrical path from the root section of the wind turbine blade to the tip section of the wind turbine blade, a second electrical path from the tip section to the root section and an electrical time-domain reflectometry device, electrically connected to the first electrical path and the second electrical path for performing electrical time-domain reflectometry measurements within the first electrical path and the second electrical path.

The wind turbine according to the invention may comprise a plurality of different components, which may be of conventional size, shape and/or material. With other words, the wind turbine can have an appearance, which does not necessarily differ from conventional wind turbines, when looked at from the outside.

The wind turbine blade comprises the root section for fixing the wind turbine blade to the hub, e.g., to a pitch bearing of the hub. Preferably, the root section has a round or oval cross-section and a root flange with a plurality of fixation bores for fixing the wind turbine blade to the hub, e.g., by bolts and nuts.

Next to the root section, the wind turbine blade comprises the intermediate section. The intermediate section constitutes the longest section of the wind turbine blade. Preferably, the intermediate section has a flat or substantially flat shape. Further preferred, the intermediate section is twisted about its longitudinal axis. Preferably, a width of the intermediate section decreases from the root section towards the tip end section.

Next to the intermediate section, the wind turbine blade comprises the tip end section. The tip end section constitutes a distal end of the wind turbine blade with respect to the hub. The tip end section can comprise a lightning rod, protruding from the tip end section, e.g., in a direction away from the root section, e.g., parallel or substantially parallel to the longitudinal axis of the wind turbine blade.

The spar-cap extends between the root section and the tip end section. Preferably, the spar-cap extends over the complete intermediate section. Further preferred, the spar-cap extends into the root section and/or the tip end section. The spar-cap is configured for providing stability to the wind turbine blade. It is preferred that the spar-cap constitutes a part of the outer surface of the wind turbine blade. Preferably, the wind turbine blade comprises two spar-caps, spaced apart and mutually connected by a shear web.

The first electrical path and the second electrical path are constituted by an electrical conducting material, such as copper, aluminum, carbon fibers or the like. The electrical conduction material can be integrated into the wind turbine blade wall material or can be attached to an inside surface of the wind turbine blade wall, e.g., by glue, resin, a coating or the like. Preferably, the electrical conducting material is configured for withstanding and transporting a current from a lightning strike from the tip end section to the root section. Hence, it is preferred that the first electrical path and/or the second electrical path is part of a lightning protection system of the turbine blade. Preferably, the electrical conducting material can be in or at the spar-cap.

Preferably, the first electrical path and the second electrical path are electrically coupled at or near the tip end section. Thus, the first electrical path and the second electrical path constitute an electrical circuit with the extension from the root section to the tip end section and back to the root section.

The electrical time-domain reflectometry device is electrically connected to the first electrical path and/or the second electrical path. Preferably, the electrical time-domain reflectometry device is located within the wind turbine blade, the hub or the nacelle. The electrical time-domain reflectometry device is configured for performing electrical time-domain reflectometry measurements within the first electrical path and the second electrical path. This can be executed, e.g., by sending an electrical impulse through the first electrical path and receiving the electrical impulse from the second electrical path. By evaluating the running time, parameter modification or the like of the electrical impulse, the electrical time-domain reflectometry device can determine the extent and distribution of strain and damages to the wind turbine blade with a high accuracy. Thus, strain control of the wind turbine blade can be performed. Within the invention, strain control can be considered as strain measurement. Advantageously, strain control comprises countermeasures to keep strain below a strain threshold. The controlled strain can be distributed strain and/or point strain.

A wind turbine according to the invention has the advantage over conventional wind turbines that in a simple and inexpensive way the extent and distribution of strain and damages to the wind turbine blade can be determined reliably with a high accuracy. Even existing wind turbines can be provided with the strain control easily. Moreover, costly equipment can be saved. Furthermore, the strain can be controlled during operation of the wind turbine and in an inactive state. Thus, the determined strain data can be used for supporting the operation control of the wind turbine, e.g., to avoid damages to the wind turbine due to strong winds, and for determining cracks, delaminations, breakages or other damages within the structure of the wind turbine blade.

According to a preferred further development of the invention, a wind turbine can provide that the first electrical path and/or the second electrical path is provided by the spar-cap of the wind turbine blade. Preferably, the first electrical path is provided by a first spar-cap of the wind turbine blade and the second electrical path is provided by a second spar-cap of the wind turbine blade, wherein the first spar-cap and the second spar-cap are electrically coupled at the tip end section. Alternatively, the first electrical path is provided by a first section of the spar-cap of the wind turbine blade and the second electrical path is provided by a second section of the spar-cap, wherein the first section and the second section are electrically coupled at the tip end section. For a spar-cap with carbon fibers, the carbon fibers can constitute the electrical path. Thus, an electrical circuit is provided for the electrical time-domain reflectometry measurements. This has the advantage that in a simple and inexpensive way the integration of the strain control into existing wind turbine blades is improved. Moreover, due to the integration of the electrical paths into the spar-cap, damages of the spar-cap, which is a critical structure of the wind turbine blade, can be determined with high reliability and accuracy.

It is preferred according to the invention that the spar-cap comprises a carbon fiber. Preferably, the spar-cap comprises a plurality of carbon fibers, carbon fiber planks or the like. Further preferred, the carbon fibers are impregnated with a resin. It is preferred that the spar-cap is manufactured as a fiber-reinforced plastic or fiber-reinforced polymer or the like, wherein the reinforcement fibers are carbon fibers or at least comprise carbon fibers. This has the advantage that in a simple and inexpensive way the integration of the strain control into existing wind turbine blades is improved. Moreover, due to the integration of the electrical paths into the spar-cap, damages of the spar-cap, which is a critical structure of the wind turbine blade, can be determined with high reliability and accuracy.

More preferred, the first electrical path is provided by a first electrical conductor, which is attached to a first wall of the wind turbine blade and/or the second electrical path is provided by a second electrical conductor, which is attached to a second wall of the wind turbine blade. The first electrical conductor and/or the second electrical conductor can be attached to the spar-cap, especially at a side facing inside the wind turbine blade, e.g., next to the shear web.

The first electrical conductor and/or the second electrical conductor can be configured as a wire or the like. The material of the electrical conductor can be metal, such as copper, aluminum or the like. Alternatively, the material of the electrical conductor can be carbon, e.g., in the form of a fiber strand, fiber slab or the like. The fibers can be laminated to the spar-cap, e.g., by a resin, plastic, or the like. This has the advantage that in a simple and inexpensive way the first electrical path and the second electrical path are provided.

In a particular preferred embodiment of the invention, the first electrical conductor and/or the second electrical conductor is configured as a metal band. A metal band can be also denoted as *"metal tape"* or *"metal strip".* Preferably, the metal band has a length from the root section to the tip end section, which is substantially greater than a width of the metal band. Further preferred, the metal band has a width, which is substantially greater than a thickness of the metal band. A preferred metal is copper or, alternatively, aluminum. Preferably, the metal band is glued to an inside surface of the wind turbine blade, e.g., to the spar-cap. This has the advantage that in a simple and inexpensive way the condition of a relatively large area of the wind turbine blade can be inspected reliably with respect to strains, cracks or other damages.

Preferably, the electrical time-domain reflectometry device is electrically connected to a lightning protection system of the wind turbine blade. The lightning protection system extends from the tip end section to the root section and is connected to the ground, preferably, through or aside the tower of the wind turbine. By using the lightning protection system for strain measurement, the electrical conductors of the lightning system fulfil at least two different tasks for the wind turbine. This has the advantage that in a simple and inexpensive way, the resources of the wind turbine are used in a very effective way.

According to a preferred embodiment of the invention, the controller is configured to prepare an analysis of a test signal response of the electrical time-domain reflectometry device and to operate the wind turbine in dependence of this analysis. The parameters of the wind turbine that can be controlled in this regards can be a pitch angle of the wind turbine blades, a yaw angle, a flap angle, generator torque, stall device actuation or the like. Thus, e.g., data of a strain within the wind turbine blade due to strong winds and a first pitch angle of the wind turbine blade can be used by the control to change the first pitch angle to a second pitch angle, for which the wind turbine blade is less exposed to the wind, when the strain is above a predefined upper strain threshold, or to change the first pitch angle to a third pitch angle, for which the wind turbine blade is more exposed to the wind, when the strain is below a predefined lower strain threshold. This has the advantage that in a simple and inexpensive way, the risk of damages to the wind turbine blade due to overload can be reduced and a power generation of the wind turbine can be improved.

Particularly preferred, the preparation of the analysis of the test signal response comprises a comparison of an actual test signal response with previous test signal responses for the same wind turbine blade and/or a comparison of actual test signal responses for a first wind turbine blade of the wind turbine blades with the actual test signal responses for a second wind turbine blade of the wind turbine blades and/or an application of the test signal response to a computer model of the wind turbine blade. Preferably, other variables, such as wind speed, precipitation, pitch angle, yaw angle or the like, are considered for the analysis. By comparing the actual test signal response for a wind turbine blade with previous test signal responses, a structural change of the wind turbine blade, e.g., due to strain, breakages or the like, can be identified easily and reliably. By comparing the actual test signal responses for the first wind turbine blade with the actual test signal responses for a second wind turbine blade, a changing deviation of the responses for the different wind turbine blades can be determined, which is a hint for possible damages to one of these wind turbine blades, wherein the other variables mentioned above, can be neglected. With a computer model of the wind turbine blade, the condition of the wind turbine blade can be calculated reliably. Preferably, the controller comprises an artificial intelligence for preparing the analysis and/or for adjusting the computer model of the wind turbine, e.g., considering measurement data of the electrical time-domain reflectometry device, additional sensors or the like. This has the advantage that in a simple and inexpensive way the extent and distribution of strain and damages to the wind turbine blade can be determined an improved reliability and with a higher accuracy.

It is preferred, according to the invention that the electrical time-domain reflectometry device is arranged at the root section of the wind turbine blade or the hub. The root section of the wind turbine blade and the hub comprise a hollow space, which is providing enough space for the electrical time-domain reflectometry device. The electrical time-domain reflectometry device can be mounted to the inside of the turbine blade wall in the root section or the hub wall, e.g., by screws, glue or the like. This has the advantage that in a simple and inexpensive way, the wind turbine has a compact design, because no additional space within the limits of the nacelle is needed for the electrical time-domain reflectometry device.

Preferably, the wind turbine comprises a lightning bypass switch for disconnecting the electrical time-domain reflectometry device from the tip end section and providing an electrical bypass from the tip end section around the electrical time-domain reflectometry device in a bypass position and for providing an electrical conduct from the tip end section to the electrical time-domain reflectometry device in a measurement position. It is preferred that the lightning bypass switch is configured for obtaining the bypass position standard wise, while the measurement position is just obtained for the time period of a measurement of the electrical time-domain reflectometry device. With the lightning bypass switch, the electrical time-domain reflectometry device can be secured from a lightning strike. This has the advantage that in a simple and inexpensive way, the reliability and lifetime of the electrical time-domain reflectometry device are further increased.

According to a second aspect of the invention, the object is achieved by a method for determining a strain of a wind turbine blade of a wind turbine according to the invention. The method comprises:
- generating a test signal for the first electrical path by the electrical time-domain reflectometry device,
- receiving a first test signal response from the first electrical path by the electrical time-domain reflectometry device,
- receiving a second test signal response from the second electrical path by the electrical time-domain reflectometry device, and
- determining a strain of the wind turbine blade by analyzing the test signal responses by the electrical time-domain reflectometry device.

Firstly, the electrical time-domain reflectometry device generates the test signal through the first electrical path. The test signal can be a standard test signal as used in standard electrical time-domain reflectometry procedures, e.g., for measuring a condition of an underground cable. Due to the properties and conditions of the first electrical path and the second electrical path, the test signal can be reflected back through the first electrical path to the electrical time-domain reflectometry device. Especially when the electrical path has breakages, such reflections are greater. This reflection is denoted as first test signal response.

Moreover, due to the properties and conditions of the first electrical path and the second electrical path, the test signal can be transmitted through the second electrical path to the electrical time-domain reflectometry device. Especially when the electrical path has no breakages, such transmissions are greater. This transmission is denoted as a second test signal response. When the first electrical path and/or the second electrical path has an interruption, the second test signal response can be a zero signal. Finally, the electrical time-domain reflectometry device performs an analysis of the received first test signal response and the second test signal response and determines the strain of the wind turbine blade.

The Method according to the invention has all the advantages that have already been described for a wind turbine according to the first aspect of the invention. Accordingly, the method according to the invention has the advantage over conventional methods that in a simple and inexpensive way the extent and distribution of strain and damages to the wind turbine blade can be determined reliably with a high accuracy. Moreover, costly equipment can be saved. Furthermore, the strain can be controlled during operation of the wind turbine and in an inactive state. Thus, the determined strain data can be used for supporting the operation control of the wind turbine, e.g., to avoid damages to the wind turbine due to strong winds, and for determining cracks, breakages or other damages within the structure of the wind turbine blade.

Preferably, analyzing the test signal response comprises a comparison of an actual test signal response with previous test signal responses for the same wind turbine blade and/or a comparison of the actual test signal responses of a first wind turbine blade of the wind turbine blades with the actual test signal responses of a second wind turbine blade of the wind turbine blades and/or an application of the test signal response to a computer model of the wind turbine blade.

It is preferred that further parameters, such as a wind speed, air pressure, a pitch angle of the wind turbine blade, precipitation, temperature or the like, are considered as well to enable a meaningful comparison without major errors. By analyzing the test signal with a comparison of the actual test signal response with the previous test signal responses for the same wind turbine blade, a change in the properties of the wind turbine blade can be determined easily.

By analyzing the test signal with a comparison of the actual test signal responses of the first wind turbine blade with the actual test signal responses of the second wind turbine, the fact that a change in the properties of one of the two wind turbine blades can be determined easily. Further preferred, this comparison involves the comparison with the actual test signal responses of a third wind turbine blade of the wind turbine blades in the same manner as well. Thus, all wind turbine blades are monitored and the risk of a faulty analysis due to the simultaneously occurring damage to two wind turbine blades is reduced.

By analyzing the test signal with an application of the test signal response to a computer model of the wind turbine blade, the overall condition of the wind turbine blade can be determined precisely. Preferably, an artificial intelligence is involved in this analysis for determining the overall condition of the wind turbine blade and for adjusting the computer model according to individual characteristics of the wind turbine blade, e.g., by comparing the wind turbine blade properties at initial operation of the wind turbine. This has the advantage that in a simple and inexpensive way, the analysis of the condition of the wind turbine blade is further improved.

Further advantages, features and details of the invention unfold from the following description, in which by reference to drawings working examples of the present invention are described in detail. In the drawings:
- Figure 1: shows a schematic side view of a wind turbine according to a preferred embodiment of the invention,
- Figure 2: shows a schematic perspective sectional view of a wind turbine blade of the wind turbine of figure 1,
- Figure 3: shows a schematic exploded view of an alternative wind turbine blade for the wind turbine of fig-ure 1, and
- Figure 4: shows a schematic flowchart of a preferred embodiment of the method according to the invention.

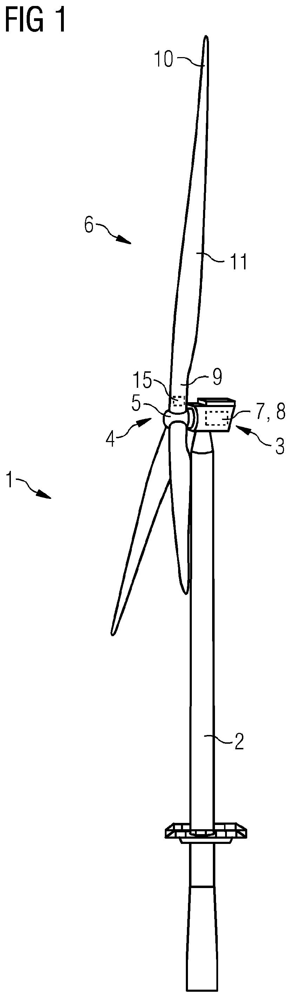

Elements with the same function and effectiveness are denoted each in figures 1 to 4 with the same reference numbers.

In Fig. 1, a wind turbine 1 according to a preferred embodiment of the invention is shown in a schematic side view. The wind turbine 1 comprises a tower 2, a nacelle 3, pivotably mounted onto the tower 2, a rotor 4, rotatably mounted to the nacelle 3, a hub 5, mounted to an end of the rotor 4, three wind turbine blades 6, with a root section 9, a tip end section 10 and an intermediate section 11 between the root section 9 and the tip end section 10. The root sections 9 are pivotably mounted to the hub 5.

A generator 7 is arranged inside the nacelle 3 and mechanically coupled to the rotor 4 for converting rotational energy of the rotor 4 into electrical energy. For controlling the operation of the wind turbine 1, a controller 8 is arranged inside the nacelle 3. For performing electrical time-domain reflectometry measurements within the wind turbine blade 6, an electrical time-domain reflectometry device 15 is arranged in the root section 9 of the wind turbine blade 6.

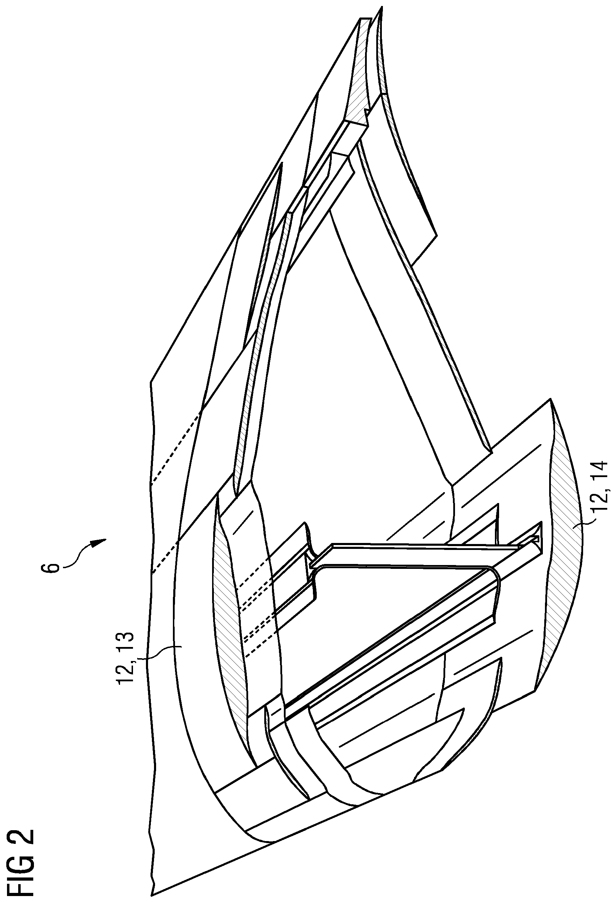

Fig. 2 shows a wind turbine blade 6 of the wind turbine 1 of fig. 1 in a schematic perspective sectional view. Especially for stabilization purposes, the wind turbine blade 6 comprises two spar-caps 12, manufactured of carbon fibers and resin. In this figure, an upper spar-cap 12 constitutes a first electrical path 13. A lower spar-cap 12 constitutes a second electrical path 14.

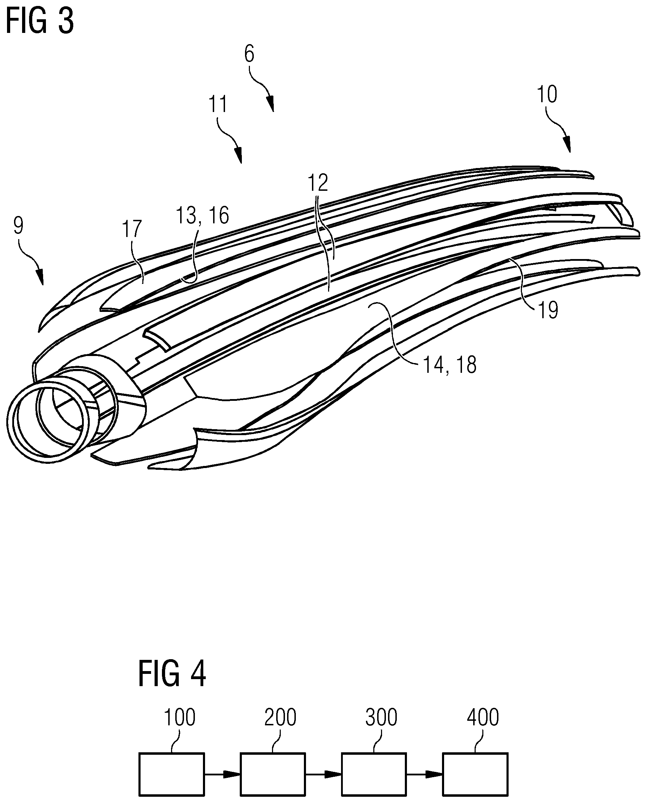

In Fig. 3, an alternative wind turbine blade 6 for the wind turbine 1 of fig. 1 is shown in a schematic exploded view. The root section 9, the intermediate section 11 and the tip end section 10 of the wind turbine blade 6 are illustrated. In this alternative embodiment, the first electrical path 13 is provided by a first electrical conductor 16. The first electrical conductor 16 is attached to a first wall 17 of the wind turbine blade 6. The second electrical path 14 is provided by a second electrical conductor 18. The second electrical conductor 18 is attached to a second wall 19 of the wind turbine blade 6.

Fig. 4 shows a preferred embodiment of the method according to the invention in a schematic flowchart. In a first action 100, a test signal for the first electrical path 13 is generated by the electrical time-domain reflectometry device 15. In a second method action 200, a first test signal response from the first electrical path 13 is received by the electrical time-domain reflectometry device 15. In a third method action 300, a second test signal response from the second electrical path 14 is received by the electrical time-domain reflectometry device 15. In a fourth method action 400, a strain of the wind turbine blade 6 is determined by the electrical time-domain reflectometry device 15 by analyzing the test signal responses.

## Claims

1. Wind turbine (1) with a wind turbine blade strain control, comprising a tower (2), a nacelle (3), a rotor (4), a hub (5), a plurality of wind turbine blades (6), a generator (7) and a controller (8) for controlling the operation of the wind turbine (1), wherein the wind turbine blades (6) comprise a root section (9) for engaging the hub (5), a tip end section (10) and an intermediate section (11) between the root section (9) and the tip end section (10), wherein the wind turbine blades (6) comprise a spar-cap (12), extending between the root section (9) and the tip end section (10),
**characterized in,**
**that** the wind turbine blade (6) comprises a first electrical path (13) from the root section (9) of the wind turbine blade (6) to the tip section (10) of the wind turbine blade (6), a second electrical path (14) from the tip section (10) to the root section (9) and an electrical time-domain reflectometry device (15), electrically connected to the first electrical path (13) and the second electrical path (14) for performing electrical time-domain reflectometry measurements within the first electrical path (13) and the second electrical path (14).

2. Wind turbine (1) according to claim 1,
**characterized in,**
**that** the first electrical path (13) and/or the second electrical path (14) is provided by the spar-cap (12) of the wind turbine blade (6).

3. Wind turbine (1) according to claim 2
**characterized in,**
**that** the spar-cap (12) comprises a carbon fiber.

4. Wind turbine (1) according to any of the previous claims,
**characterized in,**
**that** the first electrical path (13) is provided by a first electrical conductor (16), which is attached to a first wall (17) of the wind turbine blade (6) and/or the second electrical path (14) is provided by a second electrical conductor (18), which is attached to a second wall (19) of the wind turbine blade (6).

5. Wind turbine (1) according to claim 4
**characterized in,**
**that** the first electrical conductor (16) and/or the second electrical conductor (18) is configured as a metal band.

6. Wind turbine (1) according to any of the previous claims, **characterized in,**
**that** the electrical time-domain reflectometry device (15) is electrically connected to a lightning protection system of the wind turbine blade (6).

7. Wind turbine according (1) to any of the previous claims, **characterized in,**
**that** the controller (8) is configured to prepare an analysis of a test signal response of the electrical time-domain reflectometry device (15) and to control an operation of the wind turbine (1) in dependence of this analysis.

8. Wind turbine (1) according to claim 7,
**characterized in,**
**that** the preparation of the analysis of the test signal response comprises a comparison of an actual test signal response with previous test signal responses for the same wind turbine blade (6) and/or a comparison of the actual test signal responses for a first wind turbine blade (6) of the wind turbine blades (6) with the actual test signal responses for a second wind turbine blade (6) of the wind turbine blades (6) and/or an application of the test signal response to a computer model of the wind turbine blade (6).

9. Wind turbine (1) according to any of the previous claims, **characterized in,**
**that** the electrical time-domain reflectometry device (15) is arranged at the root section (9) of the wind turbine blade (6) or the hub(5).

10. Wind turbine (1) according to any of the previous claims, **characterized in,**
**that** the wind turbine (1) comprises a lightning bypass switch for disconnecting the electrical time-domain reflectometry device (15) from the tip end section (10) and providing an electrical bypass from the tip end section (10) around the electrical time-domain reflectometry device (15) in a bypass position and for providing an electrical conduct from the tip end section (10) to the electrical time-domain reflectometry device (15) in a measurement position.

11. Method for determining a strain of a wind turbine blade (6) of a wind turbine (1) according to any of the previous claims, the method comprising:
- generating a test signal for the first electrical path (13) by the electrical time-domain reflectometry device (15),
- receiving a first test signal response from the first electrical path (13) by the electrical time-domain reflectometry device (15),
- receiving a second test signal response from the second electrical path (14) by the electrical time-domain reflectometry device (15), and
- determining a strain of the wind turbine blade (6) by analyzing the test signal responses by the electrical time-domain reflectometry device (15).

12. Method according to claim 11,
**characterized in,**
**that** analyzing the test signal response comprises a comparison of an actual test signal response with previous test signal responses for the same wind turbine blade (6) and/or a comparison of actual test signal responses of a first wind turbine blade (6) of the wind turbine blades (6) with the actual test signal responses of a second wind turbine blade (6) of the wind turbine blades (6) and/or an application of the test signal response to a computer model of the wind turbine blade (6).

## Patentansprüche

1. Windturbine (1) mit einer Windturbinenblatt-Belastungsregelung, die einen Turm (2), eine Gondel (3), einen Rotor (4), eine Nabe (5), mehrere Windturbinenblätter (6), einen Generator (7) und eine Steuerung (8) zum Steuern des Betriebs der Windturbine (1) aufweist, wobei die Windturbinenblätter (6) einen Fußabschnitt (9) zum Eingriff in die Nabe (5), einen Spitzenendabschnitt (10) und einen Zwischenabschnitt (11) zwischen dem Fußabschnitt (9) und dem Spitzenendabschnitt (10) umfassen, wobei die Windturbinenblätter (6) eine Holmkappe (12) aufweisen, die sich zwischen dem Fußabschnitt (9) und dem Spitzenendabschnitt (10) erstreckt,
**dadurch gekennzeichnet, dass**
das Windturbinenblatt (6) einen ersten elektrischen Pfad (13) von dem Fußabschnitt (9) des Windturbinenblatts (6) zu dem Spitzenabschnitt (10) des Windturbinenblatts (6), einen zweiten elektrischen Pfad (14) von dem Spitzenabschnitt (10) zu dem Fußabschnitt (9) und eine elektrische Zeitbereichsreflektometrievorrichtung (15) aufweist, die elektrisch mit dem ersten elektrischen Pfad (13) und dem zweiten elektrischen Pfad (14) verbunden ist, um elektrische Zeitbereichsreflektometriemessungen in dem ersten elektrischen Pfad (13) und den zweiten elektrischen Pfad (14) durchzuführen.

2. Windturbine (1) nach Anspruch 1,
**dadurch gekennzeichnet, dass**
der erste elektrische Pfad (13) und/oder der zweite elektrische Pfad (14) durch die Holmkappe (12) des Windturbinenblatts (6) bereitgestellt werden.

3. Windturbine (1) nach Anspruch 2,
**dadurch gekennzeichnet, dass**
die Holmkappe (12) eine Kohlefaser aufweist.

4. Windturbine (1) nach einem der vorhergehenden Ansprüche, **dadurch gekennzeichnet, dass**
der erste elektrische Pfad (13) durch einen ersten elektrischen Leiter (16) bereitgestellt wird, der an einer ersten Wand (17) des Windturbinenblatts (6) befestigt ist, und/oder der zweite elektrische Pfad (14) durch einen zweiten elektrischen Leiter (18) bereitgestellt wird, der an einer zweiten Wand (19) des Windturbinenblatts (6) befestigt ist.

5. Windturbine (1) nach Anspruch 4,
**dadurch gekennzeichnet, dass**
der erste elektrische Leiter (16) und/oder der zweite elektrische Leiter (18) als ein Metallband ausgebildet sind.

6. Windturbine (1) nach einem der vorhergehenden Ansprüche, **dadurch gekennzeichnet, dass**
die elektrische Zeitbereichsreflektometrievorrichtung (15) elektrisch mit einem Blitzschutzsystem des Windturbinenblatts (6) verbunden ist.

7. Windturbine (1) nach einem der vorhergehenden Ansprüche, **dadurch gekennzeichnet, dass**
die Steuerung (8) ausgelegt ist zum Erstellen einer Analyse einer Testsignalantwort der elektrischen Zeitbereichsreflektometrievorrichtung (15) und Steuern eines Betriebs der Windturbine (1) in Abhängigkeit von dieser Analyse.

8. Windturbine (1) nach Anspruch 7,
**dadurch gekennzeichnet, dass**
die Erstellung der Analyse der Testsignalantwort einen Vergleich einer tatsächlichen Testsignalantwort mit vorherigen Testsignalantworten für dasselbe Windturbinenblatt (6) und/oder einen Vergleich der tatsächlichen Testsignalantworten für ein erstes Windturbinenblatt (6) der Windturbinenblätter (6) mit den tatsächlichen Testsignalantworten für ein zweites Windturbinenblatt (6) der Windturbinenblätter (6) und/oder ein Anlegen der Testsignal Antwort an ein Computermodell des Windturbinenblatts (6) umfasst.

9. Windturbine (1) nach einem der vorhergehenden Ansprüche, **dadurch gekennzeichnet, dass**
die elektrische Zeitbereichsreflektometrievorrichtung (15) an dem Fußabschnitt (9) des Windturbinenblatts (6) oder der Nabe (5) angeordnet ist.

10. Windturbine (1) nach einem der vorhergehenden Ansprüche, **dadurch gekennzeichnet, dass**
die Windturbine (1) einen Blitzbypassschalter zum Trennen der elektrischen Zeitbereichsreflektometrievorrichtung (15) von dem Spitzenendabschnitt (10) und zum Bereitstellen eines elektrischen Bypasses von dem Spitzenendabschnitt (10) um die elektrische Zeitbereichsreflektometrievorrichtung (15) herum in einer Bypass-Stellung und zum Bereitstellen einer elektrischen Leitung von dem Spitzenendabschnitt (10) zu der elektrischen Zeitbereichsreflektometrievorrichtung (15) in einer Mess-Stellung umfasst.

11. Verfahren zum Bestimmen einer Belastung eines Windturbinenblatts (6) einer Windturbine (1) nach einem der vorhergehenden Ansprüche, wobei das Verfahren Folgendes umfasst:
- Erzeugen eines Testsignals für den ersten elektrischen Pfad (13) durch die elektrische Zeitbereichsreflektometrievorrichtung (15),
- Empfangen einer ersten Testsignalantwort von dem ersten elektrischen Pfad (13) durch die elektrische Zeitbereichsreflektometrievorrichtung (15),
- Empfangen einer zweiten Testsignalantwort von dem zweiten elektrischen Pfad (14) durch die elektrische Zeitbereichsreflektometrievorrichtung (15) und
- Bestimmen einer Belastung des Windturbinenblatts (6) durch Analysieren der Testsignalantworten durch die elektrische Zeitbereichsreflektometrievorrichtung (15).

12. Verfahren nach Anspruch 11,
**dadurch gekennzeichnet, dass**
Analysieren der Testsignalantwort einen Vergleich einer tatsächlichen Testsignalantwort mit vorherigen Testsignalantworten für dasselbe Windturbinenblatt (6) und/oder einen Vergleich der tatsächlichen Testsignalantworten für ein erstes Windturbinenblatt (6) der Windturbinenblätter (6) mit den tatsächlichen Testsignalantworten für ein zweites Windturbinenblatt (6) der Windturbinenblätter (6) und/oder ein Anlegen der Testsignal Antwort an ein Computermodell des Windturbinenblatts (6) umfasst.

## Revendications

1. Éolienne (1) ayant un contrôle de tension de pale d'éolienne, comprenant une tour (2), une nacelle (3), un rotor (4), un moyeu (5), une pluralité de pales d'éolienne (6), un générateur (7) et une commande (8) pour commander le fonctionnement de l'éolienne (1), dans laquelle les pales d'éolienne (6) comprennent une section d'emplanture (9) pour engager le moyeu (5), une section d'extrémité de pointe (10) et une section intermédiaire (11) entre la section d'emplanture (9) et la section d'extrémité de pointe (10), dans laquelle les pales d'éolienne (6) comprennent un capuchon de longeron (12), s'étendant entre la section d'emplanture (9) et la section d'extrémité de pointe (10),
**caractérisée en ce que** la pale d'éolienne (6) comprend un premier trajet électrique (13) depuis la section d'emplanture (9) de la pale d'éolienne (6) vers la section de pointe (10) de la pale d'éolienne (6), un deuxième trajet électrique (14) depuis la section de pointe (10) vers la section d'emplanture (9) et un dispositif électrique de réflectométrie en domaine temporel (15), électriquement connecté au premier trajet électrique (13) et au deuxième trajet électrique (14) pour effectuer des mesures électriques de réflectométrie en domaine temporel à l'intérieur du premier trajet électrique (13) et du deuxième trajet électrique (14).

2. Éolienne (1) selon la revendication 1,
**caractérisée en ce que** le premier trajet électrique (13) et/ou le deuxième trajet électrique (14) est/sont fourni(s) par le capuchon de longeron (12) de la pale d'éolienne (6).

3. Éolienne (1) selon la revendication 2,
**caractérisée en ce que** le capuchon de longeron (12) comprend une fibre de carbone.

4. Éolienne (1) selon l'une quelconque des revendications précédentes,
**caractérisée en ce que** le premier trajet électrique (13) est fourni par un premier conducteur électrique (16), qui est fixé à une première paroi (17) de la pale d'éolienne (6) et/ou **en ce que** le deuxième trajet électrique (14) est fourni par un deuxième conducteur électrique (18), qui est fixé à une deuxième paroi (19) de la pale d'éolienne (6).

5. Éolienne (1) selon la revendication 4,
**caractérisée en ce que** le premier conducteur électrique (16) et/ou le deuxième conducteur électrique (18) est/sont configuré(s) comme une bande métallique.

6. Éolienne (1) selon l'une quelconque des revendications précédentes,
**caractérisée en ce que** le dispositif électrique de réflectométrie en domaine temporel (15) est électriquement connecté à un système de protection contre la foudre de la pale d'éolienne (6).

7. Éolienne (1) selon l'une quelconque des revendications précédentes,
**caractérisée en ce que** la commande (8) est configuré pour préparer une analyse d'une réponse de signal de test du dispositif électrique de réflectométrie en domaine temporel (15) et pour commander un fonctionnement de l'éolienne (1) en fonction de cette analyse.

8. Éolienne (1) selon la revendication 7,
**caractérisée en ce que** la préparation de l'analyse de la réponse de signal de test comprend une comparaison d'une réponse réelle de signal de test à des réponses antérieures de signal de test pour la même pale d'éolienne (6) et/ou une comparaison des réponses réelles de signal de test pour une première pale d'éolienne (6) des pales d'éolienne (6) aux réponses réelles de signal de test pour une deuxième pale d'éolienne (6) des pales d'éolienne (6) et/ou une application de la réponse de signal de test à un modèle informatique de la pale d'éolienne (6).

9. Éolienne (1) selon l'une quelconque des revendications précédentes,
**caractérisée en ce que** le dispositif électrique de réflectométrie en domaine temporel (15) est agencé au niveau de la section d'emplanture (9) de la pale d'éolienne (6) ou du moyeu(5).

10. Éolienne (1) selon l'une quelconque des revendications précédentes,
**caractérisée en ce que** l'éolienne (1) comprend un commutateur de contournement de foudre pour déconnecter le dispositif électrique de réflectométrie en domaine temporel (15) de la section d'extrémité de pointe (10) et fournir un contournement électrique depuis la section d'extrémité de pointe (10) autour du dispositif électrique de réflectométrie en domaine temporel (15) dans une position de contournement et pour fournir un conduit électrique de la section d'extrémité de pointe (10) au dispositif électrique de réflectométrie en domaine temporel (15) dans une position de mesure.

11. Procédé de détermination d'une tension d'une pale d'éolienne (6) d'une éolienne (1) selon l'une quelconque des revendications précédentes, le procédé comprenant :
- générer un signal de test pour le premier trajet électrique (13) par le dispositif électrique de réflectométrie en domaine temporel (15),
- recevoir une première réponse de signal de test depuis le premier trajet électrique (13) par le dispositif électrique de réflectométrie en domaine temporel (15),
- recevoir une deuxième réponse de signal de test depuis le deuxième trajet électrique (14) par le dispositif électrique de réflectométrie en domaine temporel (15), et
- déterminer une tension de la pale d'éolienne (6) en analysant les réponses de signal de test par le dispositif électrique de réflectométrie en domaine temporel (15).

12. Procédé selon la revendication 11,
**caractérisée en ce que** l'analyse de la réponse de signal de test comprend une comparaison d'une réponse réelle de signal de test à des réponses précédentes de signal de test pour la même pale d'éolienne (6) et/ou une comparaison de réponses réelles de signal de test d'une première pale d'éolienne (6) des pales d'éolienne (6) aux réponses réelles de signal de test d'une deuxième pale d'éolienne (6) des pales d'éolienne (6) et/ou une application de la réponse de signal de test à un modèle informatique de la pale d'éolienne (6).
